# EUROPEAN PATENT APPLICATION

(11) **EP 3 447 705 A1**
(43) Date of publication of application: **27.02.2019**
(21) Application number: 18189976.6
(22) Date of filing: 21.08.2018
(51) Int. Cl.: G06Q 20/22, G06Q 20/38, G06Q 20/40, G06Q 20/06

(54) **TRANSACTION PLATFORM PROVIDING UNIFIED INTERACTION WITH MULTIPLE HETEROGENEOUS BLOCKCHAINS**

(30) Priority: 22.08.2017 US 201762548773 P; 06.12.2017 US 201715833321
(71) Applicant: SAP SE, 69190 Walldorf (DE)
(72) Inventor: MITCHELL, John, 69190 Walldorf (DE); FOX, Joseph, 69190 Walldorf (DE)
(74) Representative: Müller-Boré & Partner Patentanwälte PartG mbB

(57) **Abstract**

A platform for facilitating computer-implemented transaction interacts with heterogeneous computer-implemented decentralized ledgers (e.g., blockchains, etc.). The platform has the ability to provide a unified interface in which the contents of such ledgers can be accessed or otherwise consumed and, additionally, the ability to write on such ledgers using such unified interface. Decentralized ledgers or blockchains as provided herein can save data publicly (or optionally privately) on a decentralized database which cannot be erased. Many computing nodes in a network (which can be vast and include thousands of nodes, etc.) can be used to store this data in a decentralized manner and cryptographic algorithms can provide that the data cannot be changed unknowingly.

## Description

### RELATED APPLICATION

The current application claims priority to U.S. Pat. App. Ser. No. 62/548,773 filed on August 22, 2017, the contents of which are hereby fully incorporated by reference.

### TECHNICAL FIELD

The subject matter described herein relates to a computer-based transaction platform that enables interactions, via the transaction platform, leveraging multiple heterogeneous computer-implemented decentralized ledgers (e.g., blockchains, etc.) including the provision of a unified view as well as the ability to write into such ledgers.

### BACKGROUND

A blockchain is a distributed database that maintains a continuously-growing list of ordered records called blocks. Each block contains a timestamp and a link to a previous block and can specify one or more related events. Once created, blocks cannot be modified. Such an arrangement has led to blockchains being adopted for use in various types of industries and applications that can benefit from the use of a decentralized digital ledger.

### SUMMARY

The current subject matter is directed to a transactions platform application, such as the SAP ARIBA NETWORK, which utilizes blockchains to enhance or otherwise supplement business transactions conducted via one or more marketplaces. These transactions platform applications can provide a unified interface to numerous blockchains, both public and private which may have heterogeneous and/or incompatible formats.

In particular, the current subject matter allows for transactions to leverage numerous blockchains and, at the same time, provide immutability that allows for transactions to be updated (e.g., for supply issues, weather delays, etc.). Further, such transactions leveraging blockchains need not be of a set format.

In one aspect, a transaction is initiated on a computer-implemented transaction platform application between two or more participants involving the provision of goods and/or services and implicating two or more blockchains. Thereafter, an identification directory of the transaction platform application is polled to obtain access credentials for the blockchains. Thereafter, the transaction platform accesses, using the obtained access credentials, information from each of the blockchains. The transaction platform application then facilitates completion of the transaction utilizing the accessed information.

The transaction platform application can coordination the creation and update of information on the blockchains based on interactions associated with the transaction involving participants that may or may not be members of the transaction platform application.

The access credentials can include a blockchain identification (ID) that comprises credential information to directly access one of the blockchains.

The access credentials can include an application programming interface (API) identification (ID) that comprises credential information to indirectly access one of the blockchains via an object.

In some variations, a first of the blockchains can access additional information required for completion of the transaction directly from a second of the blockchains outside of the transaction platform application. In such cases, the first of the at least two blockchains provides the additional information to the transaction platform application so that the transaction is further completed using the additional information. The first of the at least two blockchains can access the second of the at least two blockchains using a cross link association.

The transaction platform application can access at least one of the blockchains by way of a smart contract.

In another aspect, a computer-implemented transaction platform application executes a transaction between two or more participants involving the provision of goods and/or services and implicating two or more blockchains. Thereafter, an identification directory of the transaction platform application is polled to obtain access credentials for the blockchains. Subsequently, the transaction platform records information to the blockchains which reflect aspects of the transaction using the obtained access credentials.

Non-transitory computer program products (i.e., physically embodied computer program products) are also described that store instructions, which when executed by one or more data processors of one or more computing systems, cause at least one data processor to perform operations herein. Similarly, computer systems are also described that can include one or more data processors and memory coupled to the one or more data processors. The memory can temporarily or permanently store instructions that cause at least one processor to perform one or more of the operations described herein. In addition, methods can be implemented by one or more data processors either within a single computing system or distributed among two or more computing systems. Such computing systems can be connected and can exchange data and/or commands or other instructions or the like via one or more connections, including but not limited to a connection over a network (e.g., the Internet, a wireless wide area network, a local area network, a wide area network, a wired network, or the like), via a direct connection between one or more of the multiple computing systems, etc.

The subject matter described herein provides many technical advantages. For example, the current subject matter enables a unified view of heterogeneous blockchains to help facilitate transactions on a transaction platform that utilize such blockchains.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a first system diagram illustrating a transaction platform leveraging multiple decentralized ledgers;
FIG. 2 is a second system diagram illustrating a transaction platform leveraging multiple decentralized ledgers;
FIG. 3 is a third system diagram illustrating a transaction platform leveraging multiple decentralized ledgers;
FIG. 4 is a process flow diagram illustrating completion of a transaction on a transaction platform utilizing information from two or more blockchains;
FIG. 5 is a process flow diagram illustrating updating two or more blockchains to reflect completion of a transaction on a transaction platform; and
FIG. 6 is a system diagram illustrating an example computing device for implementing aspects described herein.

### DETAILED DESCRIPTION

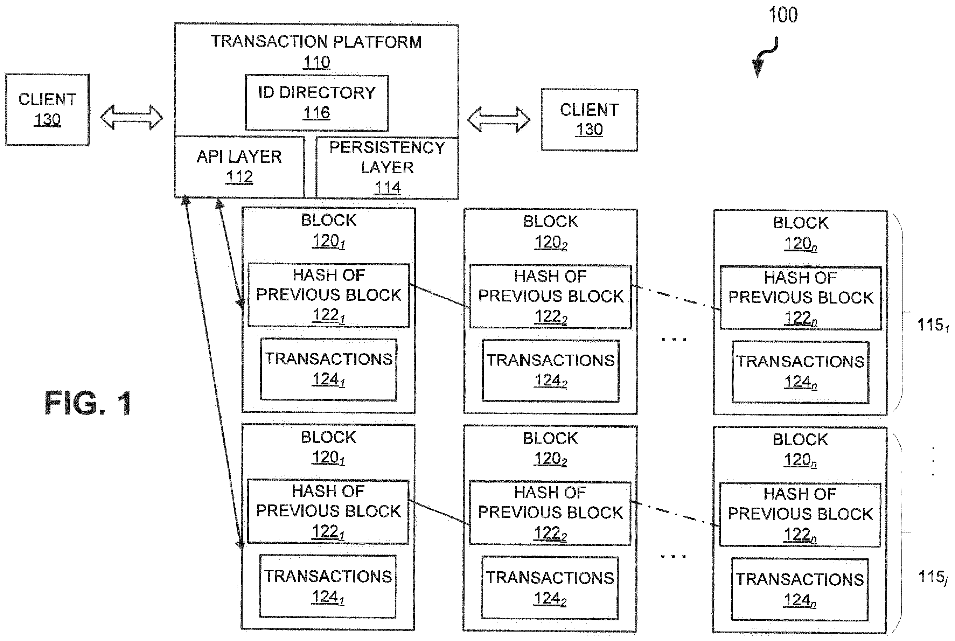

The current subject matter is directed to systems, apparatus, methods and computer program products providing a transactions platform to enable the interaction with heterogeneous computer-implemented decentralized ledgers (e.g., blockchains, etc.) including the ability to provide a unified interface in which the contents of such ledgers can be accessed or otherwise consumed and, additionally, the ability to write on such ledgers using such unified interface. Decentralized ledgers or blockchains as provided herein can save data publicly on a decentralized database (as illustrated in FIG. 1), which cannot be erased. Many computing nodes in a network (which can be vast and include thousands of nodes, etc.) can be used to store this data in a decentralized manner and cryptographic algorithms can provide that the data cannot be changed unknowingly.

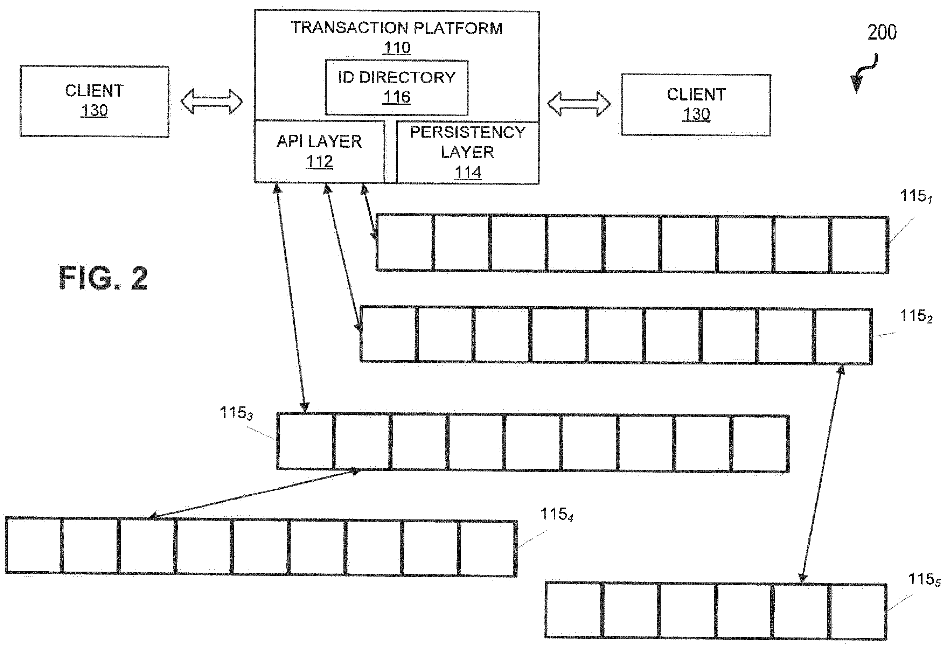

FIGs. 1 and 2 are diagrams 100, 200 illustrating a transaction platform application 110 that utilizes or otherwise interfaces with a plurality of blockchains 115_{*i*...*j*}. Each blockchain 115 comprises blocks 120_{*1*...*n*} that hold batches of valid transactions and other information 124_{*1*...*n*}. The heterogeneity of the blockchains 115 means that they may hold any information (i.e., they may have a plurality of different uses/purposes and thus may have all sorts of information that may or may not applicable to any transactions on the transaction platform application 115). The transaction platform application 110 may get/set/update information in any of those blockchains 115 as appropriate for that blockchain - some of which may be markers/cross-links about the transaction, some may be e.g., status of transactions that are completely in (a) a network provided by the transaction application platform 115 itself and/or (b) another blockchain, pieces of information of the transaction itself which is shared across one or more blockchains.

Each block 120_{*1*...*n*} includes a hash 122_{*1*...*n*} of the prior block in the blockchain 115 linking these two blocks. The linked blocks 120_{*1*...*n*} together form a chain. The transaction platform application 110 can interface by way of an API layer 112 and data obtained from the blockchains 115 can, for example, be stored in a persistence layer 114. The blockchains 115 can, in some cases (and as shown in FIG. 2), interact directly with each other (via, for example, cross-links) as opposed to via the API layer 112 of the transaction platform 110.

In addition to a secure hash based history, a blockchain 115 can include one or more algorithms for scoring different versions of the history so that one with a higher value can be selected over others. Peers supporting the database do not have exactly the same version of the history at all times, rather they keep the highest scoring version of the database that they currently know of. Whenever a peer receives a higher scoring version (usually the old version with a single new block added) they extend or overwrite their own database and retransmit the improvement to their peers. There is never an absolute guarantee that any particular entry will remain in the best version of the history forever, but because blockchains are typically built to add the score of new blocks onto old blocks and there are incentives to only work on extending with new blocks rather than overwriting old blocks, the probability of an entry becoming superseded goes down as more blocks are built on top of it, eventually becoming very low.

Each block 120_{*1*...*n*} can comprise a plurality of fields. A first field can be a block size which specifies a size of the block which can, for example, have a 4 byte size. A second field can be block header which can, for example, have an 80 byte size. A third field can be a transaction counter that specifies how many transactions follow and it can, for example, have a variable size (e.g., 1-9 bytes, etc.). A fourth field can encapsulate transactions recorded in the block 120_{*1*...*n*} and can have a variable size to accommodate various types / sizes of transactions.

The block header, which forms a field in the block 120_{*1*...*n*} can also include a plurality of fields that characterize the block 120_{*1*...*n*} and/or the blockchain 115. A first field can specify a version of the transaction platform application 110 or other software or other protocol and can, for example, have a 4 byte size. A second field can include a previous block hash which is a reference to the hash of the previous / parent block 120_{*1*...*n*-*1*} in the blockchain 115. The second field can, for example, have a 32 byte size. The third field can, for example, be a Merkle root which is a hash of the root of the Merkle tree of the transactions for the block 120_{*1*...*n*}. The third field can, for example, have a 32 byte size. The fourth field can be a timestamp which is the approximate creation time for the block 120_{*1*...*n*} and can, for example, have a size of 4 bytes. The fifth field can characterize a difficult target for the a proof-of-work algorithm as applied to the block 12o_{*1*...*n*}. The fifth field can, for example, have a size of 4 bytes. A sixth field can be a nonce which is a counter used for the proof-of-work algorithm and can have a size of 4 bytes.

The transaction platform application 110, in response to a request from the client 130, can initiate and construct transactions that result in updates one or more the blockchains 115 even if such blockchains are different / heterogeneous / proprietary. In some cases, one or more of the blockchains 115 can be public such that the transaction platform application 110 can readily access such blockchains 115 without any type of authentication. In addition or in the alternative, one or more of the blockchains 115 can be private in that it is only accessible, for example, by participants of a consortium or the like. In some cases, authentication (e.g., password login, IP address verification, VPN, etc.) is required to access and write on such private blockchains 115. As will be described in more detail below, authentication can utilize an identification directory 116 that includes various access credentials and the like.

The transaction platform application 110 can comprise an online / computer-implemented marketplace to facilitate transactions between various users. For example, the transaction platform application 110 can provide an easy-to-use, procure-to-pay software solution with streamlined catalog maintenance and a configurable interface. In particular, the transaction platform application 110 can allow for complex purchasing and fulfilment between thousands of purchasers and vendors.

The blockchain interface provided by the transaction platform application 110 brings new capabilities, opportunities, and platform value to traditional B2B Networks and procurement applications. As provided herein, peer to peer nature of the blockchains 115 provide an internet 'trust protocol' for transactions conducted through the transaction platform application 110 including those involving buyers and suppliers at all levels.

The transaction platform application 110 using the blockchains 115 can, for example, offer smart contracts. In this regard, a smart contract can be pieces of code (e.g., an object, etc.) that are added to a blockchain to provide higher-level functionality when interacting with that blockchain. The transaction platform application 110 and other applications interact with that blockchain through the smart contracts rather than accessing the individual blocks directly. The smart contracts manage the information needed to fulfill the behavior of the contract by interacting with one or more blocks 120 on the blockchain 115. The smart contract code applies business rules and functionality to those blocks to, in effect, implement a customer's contract terms at the right time and at the right point within complex transactions being implemented via the transaction application platform 110. The transaction application platform 110 can create one or more contracts in each of one or more different blockchains which consistently enforce and enact the application business rules across the blockchains 115.

In another variation, the transaction platform application 110 using the blockchains 115 can be used to confirm the identity of participants in the online marketplace implemented therein. In particular, the blockchains 115 can be used to ensure the ability to establish trust and maintain the trust protocol. The blockchains 115 can have a unique identity structure based on a combination of public and private keys and a wallet technology allowing any member of the blockchain 115 to represent, within its identity, the ability to hold assets on the blockchain 115, give assets to others on the blockchain 115, add assets to the blockchain 115, and remove assets from the blockchain 115. In the enterprise B2B space, this identity (which can be provided in the identity directory 116) can be tied to an external identity which can, for example, be a directory of buyer and seller profiles, security structure, and administrator account ownership and control structure to establish the external identity. The transaction platform application 110 can also utilize this set of assets to bring blockchain identity into the ability to ledger transactions without requiring the transactions themselves to be placed on the blockchain.

The transaction platform 110 can include an identification directory 116 that, for example, includes internal IDs (e.g., IDs unique to the transaction platform, seller IDs, buyer IDs, etc.), application programming interface (API) IDs (e.g., APIs to access objects encapsulating code providing indirect access to other blockchains, etc.), blockchain IDs (i.e., login credentials for use by the transaction platform 110 for accessing the blockchains 115), and the like. For example, the identification directory 116 can provide, for a participant utilizing the transaction platform 110, an identification specific to the transaction platform 110, identifications of other entities conducting transactions with the participant (either directly or indirectly such as part suppliers to a contracting party, etc.), APIs IDs providing access to interfaces external to the transaction platform 110 to facilitate one or more transactions being completed on the transaction platform, as well as login or access credentials to the blockchains 115.

The transaction platform application 110 can cause all current buyers and sellers to be automatically added to one or more of the blockchains 115. The transaction platform application 110 can allow all current buyers and sellers to manage their chain identity along with their access credentials (e.g., public and private keys).

The transaction platform application 110 can interact, either directly, or via another application to a track and trace blockchain 115 and/or or other information within a blockchain 115. Such a track and trace blockchain 115 or other information within a blockchain 115 can not only provide the buyers and sellers visibility into the movements of goods, but these ledger records can provide transparency and details which are the basis upon which we can build offerings such as insurance, automatic goods receipt message, enhanced business process monitoring and risk management, and solve many other market challenges in the procurement and supply chain space.

The transaction platform application 110 can also be used for enhanced supply chain financing and receivables financing using, either directly or indirectly through one or more applications, particular blockchains 115. The transaction application platform 110 can leverage such blockchains 115 by being a third party source of the invoices combined with blockchain technology which will reduce the risk of the invoices looking for financing and establishing them as a tradable asset for funders to bid on.

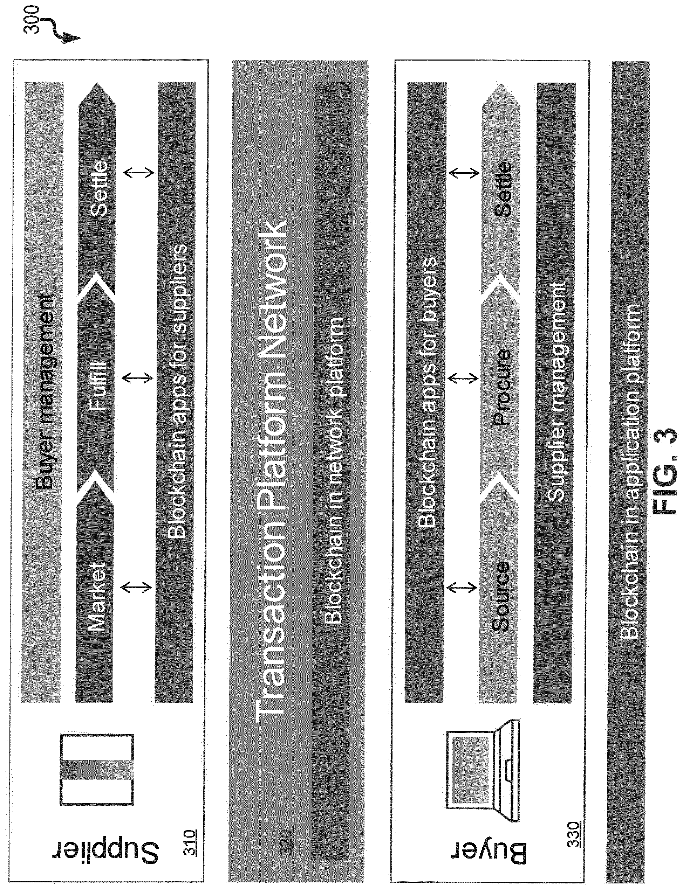

FIG. 3 is a diagram 300 illustrating a procurement architecture in which a transaction platform network 320 interfaces with a buyer system 310 and a seller system 330. The transaction platform network 320 can, for example, include its own blockchain that is used to memorialize or otherwise characterize aspects of transactions occurring via the transaction platform network 320. The buyer system 310 can include software modules to facilitate marketing of products / services, selling or products / services, and settlement of transactions including products / services. The buyer system 310 can include or otherwise include one or more blockchains which may be private to the buyer or which may be public in nature. The buyer system 330 can include module for sourcing products / services, procuring products / services, and settlement of products / services. The buyer system 330 can also include one or more blockchains which may be private to the buyer or which may be public in nature. Further, one or more of the seller system 310, the transaction platform network 320, and the seller system 330 can interact with one or more external blockchains (e.g., a blockchain in application platform, etc.).

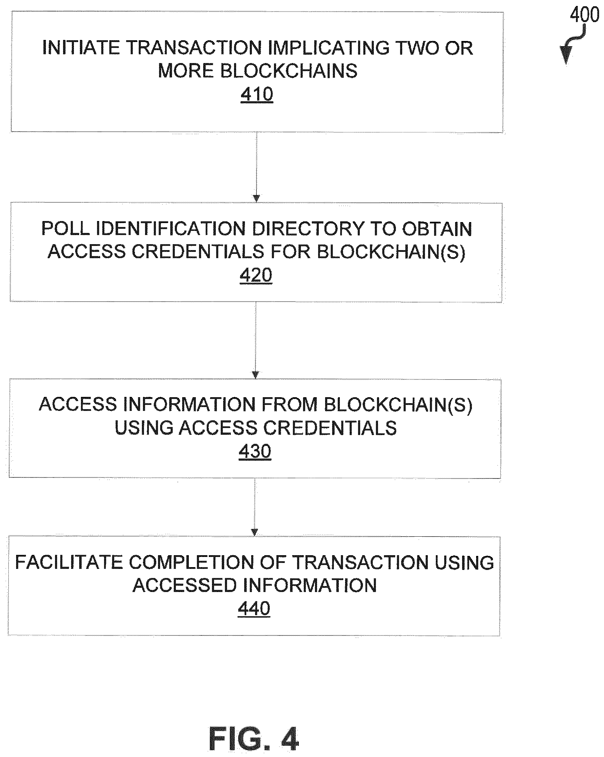

FIG. 4 is a diagram 400 in which, at 410, a transaction is initiated on a computer-implemented transaction platform (such as transaction platform 110). The transaction is between two or more participants and involves the provision of goods and/or services and implicates two or more blockchains. Subsequently, at 420, an identification directory of the transaction platform is polled (i.e., accessed, etc.) to obtain access credentials for the blockchains. The transaction platform then, at 430, accesses information from the blockchains using the obtained access credentials. The transaction platform then, at 440, facilitates completion of the transaction utilizing the accessed information. Further, the transaction platform application can coordinate the creation and update of information on the blockchains based on interactions associated with the transaction involving participants that may or may not be members of the transaction platform application.

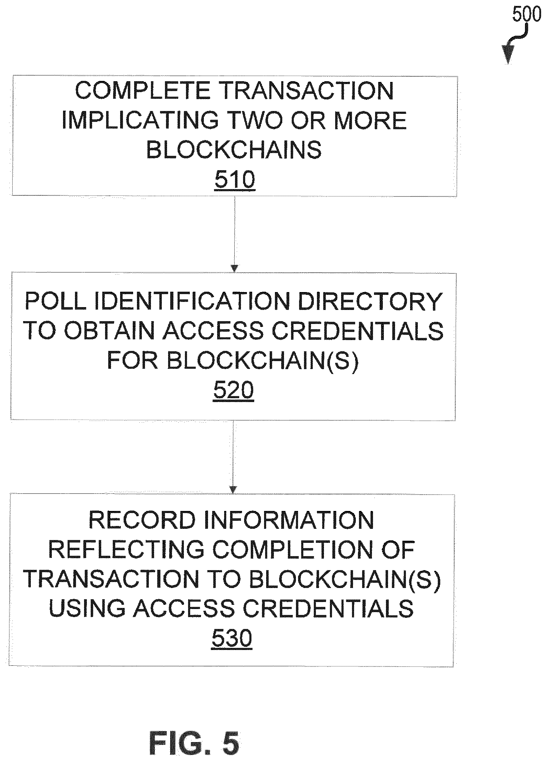

FIG. 5 is a process flow diagram 500 illustrating an arrangement in which, at 510, a computer-implemented transaction platform completes a transaction between two participants involving the provision of goods and/or services and implicating two or more blockchains. Subsequently, at 520, an identification directory of the transaction platform is polled (e.g., accessed, etc.) to obtain access credentials for the blockchains. Later, at 530, the transaction platform, using the obtained access credentials, records information to the blockchains which reflect aspects of the completed transaction.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system can include clients and servers. A client and server are generally remote from each other and typically interact through a communication network. The relationship of client and server arises by virtue of computer programs running on the respective computers and having a client-server relationship to each other.

These computer programs, which can also be referred to as programs, software, software applications, applications, components, or code, can include machine instructions for a programmable processor, and/or can be implemented in a high-level procedural language, an object-oriented programming language, a functional programming language, a logical programming language, and/or in assembly/machine language. As used herein, the term "computer-readable medium" refers to any computer program product, apparatus and/or device, such as for example magnetic discs, optical disks, solid-state storage devices, memory, and Programmable Logic Devices (PLDs), used to provide machine instructions and/or data to a programmable data processor, including a machine-readable medium that receives machine instructions as a computer - readable signal. The term "computer -readable signal" refers to any signal used to provide machine instructions and/or data to a programmable data processor. The computer -readable medium can store such machine instructions non-transitorily, such as for example as would a non-transient solid-state memory or a magnetic hard drive or any equivalent storage medium. The computer -readable medium can alternatively or additionally store such machine instructions in a transient manner, such as for example as would a processor cache or other random access memory associated with one or more physical processor cores.

The computer components, software modules, functions, data stores and data structures described herein can be connected directly or indirectly to each other in order to allow the flow of data needed for their operations. It is also noted that a module or processor includes but is not limited to a unit of code that performs a software operation, and can be implemented for example as a subroutine unit of code, or as a software function unit of code, or as an object (as in an object-oriented paradigm), or as an applet, or in a computer script language, or as another type of computer code. The software components and/or functionality can be located on a single computer or distributed across multiple computers depending upon the situation at hand.

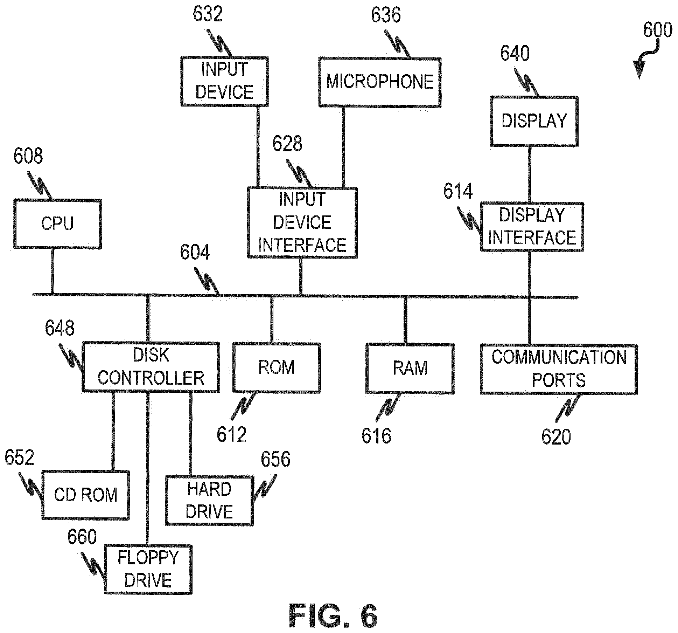

FIG. 6 is a diagram 600 illustrating a sample computing device architecture for implementing various aspects described herein. A bus 604 can serve as the information highway interconnecting the other illustrated components of the hardware. A processing system 608 labeled CPU (central processing unit) (e.g., one or more computer processors / data processors at a given computer or at multiple computers), can perform calculations and logic operations required to execute a program. A non-transitory processor-readable storage medium, such as read only memory (ROM) 612 and random access memory (RAM) 616, can be in communication with the processing system 608 and can include one or more programming instructions for the operations specified here. Optionally, program instructions can be stored on a non-transitory computer-readable storage medium such as a magnetic disk, optical disk, recordable memory device, flash memory, or other physical storage medium.

In one example, a disk controller 648 can interface one or more optional disk drives to the system bus 604. These disk drives can be external or internal floppy disk drives such as 660, external or internal CD-ROM, CD-R, CD-RW or DVD, or solid state drives such as 652, or external or internal hard drives 756. As indicated previously, these various disk drives 652, 656, 660 and disk controllers are optional devices. The system bus 604 can also include at least one communication port 620 to allow for communication with external devices either physically connected to the computing system or available externally through a wired or wireless network. In some cases, the communication port 620 includes or otherwise comprises a network interface.

To provide for interaction with a user, the subject matter described herein can be implemented on a computing device having a display device 640 (e.g., a CRT (cathode ray tube) or LCD (liquid crystal display) monitor) for displaying information obtained from the bus 604 to the user and an input device 632 such as keyboard and/or a pointing device (e.g., a mouse or a trackball) and/or a touchscreen by which the user can provide input to the computer. Other kinds of input devices 632 can be used to provide for interaction with a user as well; for example, feedback provided to the user can be any form of sensory feedback (e.g., visual feedback, auditory feedback by way of a microphone 636, or tactile feedback); and input from the user can be received in any form, including acoustic, speech, or tactile input. In the input device 632 and the microphone 636 can be coupled to and convey information via the bus 604 by way of an input device interface 628. Other computing devices, such as dedicated servers, can omit one or more of the display 640 and display interface 624, the input device 632, the microphone 636, and input device interface 628.

In the descriptions above and in the claims, phrases such as "at least one of" or "one or more of" can occur followed by a conjunctive list of elements or features. The term "and/or" can also occur in a list of two or more elements or features. Unless otherwise implicitly or explicitly contradicted by the context in which it is used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." In addition, use of the term "based on," above and in the claims is intended to mean, "based at least in part on," such that an unrecited feature or element is also permissible.

The subject matter described herein can be embodied in systems, apparatus, methods, and/or articles depending on the desired configuration. The implementations set forth in the foregoing description do not represent all implementations consistent with the subject matter described herein. Instead, they are merely some examples consistent with aspects related to the described subject matter. Although a few variations have been described in detail above, other modifications or additions are possible. For example, the current subject matter is applicable to the storage or other access of data via a cloud-based data storage service. The current subject matter is also applicable to the consumption of utilities such as electricity (e.g., use of an electric vehicle charging station by a subscription holder, etc.). In particular, further features and/or variations can be provided in addition to those set forth herein. For example, the implementations described above can be directed to various combinations and subcombinations of the disclosed features and/or combinations and subcombinations of several further features disclosed above. In addition, the logic flows depicted in the accompanying figures and/or described herein do not necessarily require the particular order shown, or sequential order, to achieve desirable results. Other implementations may be within the scope of the following claims.

## Claims

1. A computer implemented method comprising:
initiating, on a computer-implemented transaction platform, a transaction between two or more participants involving the provision of goods and/or services and implicating two or more blockchains;
polling an identification directory of the transaction platform to obtain access credentials for the blockchains;
accessing, by the transaction platform using the obtained access credentials, information from each of the blockchains; and
facilitating, by the transaction platform, completion of the transaction utilizing the accessed information.

2. The method of claim 1 further comprising:
coordinating, by the transaction platform application, creation and update of information on the blockchains based on interactions associated with the transaction involving participants that are not members of the transaction platform application; and
wherein, optionally, the method further comprises:
coordinating, by the transaction platform application, creation and update of information on the blockchains based on interactions associated with the transaction involving participants that are members of the transaction platform application.

3. The method of any one of claims 1 to 2, wherein the access credentials comprise a blockchain identification (ID) that comprises credential information to directly access one of the blockchains.

4. The method of any one of claims 1 to 3, wherein the access credentials comprise an application programming interface (API) identification (ID) that comprises credential information to indirectly access one of the blockchains via an object.

5. The method of claim 4, wherein the object is a smart contract.

6. The method of any one of claims 1 to 5 further comprising:
accessing, by a first of the blockchains directly from a second of the blockchains outside of the transaction platform, additional information required for completion of the transaction; and
providing, by the first of the at least two blockchains, the additional information to the transaction platform;
wherein the transaction is further completed using the additional information.

7. The method of claim 6, wherein the first of the at least two blockchains accesses the second of the at least two blockchains using a cross link association.

8. The method of any one of claims 1 to 7, wherein the initiating, polling, accessing, and facilitating are performed by at least one data processor forming part of at least one computing device.

9. A system comprising:
at least one data processor; and
memory storing instructions which, when executed by the at least one data processor, perform operations comprising:
initiating, on a computer-implemented transaction platform, a transaction between two or more participants involving the provision of goods and/or services and implicating two or more blockchains;
polling an identification directory of the transaction platform to obtain access credentials for the blockchains;
accessing, by the transaction platform using the obtained access credentials, information from each of the blockchains; and
facilitating, by the transaction platform, completion of the transaction utilizing the accessed information.

10. The system of claim 9, wherein the operation further comprise:
coordinating, by the transaction platform application, creation and update of information on the blockchains based on interactions associated with the transaction involving participants that are not members of the transaction platform application; and
wherein, optionally, the operations further comprise:
coordinating, by the transaction platform application, creation and update of information on the blockchains based on interactions associated with the transaction involving participants that are members of the transaction platform application.

11. The system of any one of claims 9 to 10, wherein the access credentials comprise a blockchain identification (ID) that comprises credential information to directly access one of the blockchains.

12. The system of any one of claims 9 to 11, wherein the access credentials comprise an application programming interface (API) identification (ID) that comprises credential information to indirectly access one of the blockchains via an object; and
wherein, optionally, the object is a smart contract.

13. The system of any one of claims 9 to 12, wherein the operations further comprise:
accessing, by a first of the blockchains directly from a second of the blockchains outside of the transaction platform, additional information required for completion of the transaction; and
providing, by the first of the at least two blockchains, the additional information to the transaction platform;
wherein the transaction is further completed using the additional information.

14. The system of claim 13, wherein the first of the at least two blockchains accesses the second of the at least two blockchains using a cross link association.

15. A non-transitory computer program product storing instructions which, when executed by at least one data processor forming part of at least one computing device, result in operations according to any one of claims 1 to 8.
